# EUROPÄISCHE PATENTSCHRIFT

(11) **EP 2 020 330 B1**
(45) Veröffentlichungstag und Bekanntmachung des Hinweises auf die Patenterteilung: **14.09.2011**
(21) Anmeldenummer: 08104908.2
(22) Anmeldetag: 29.07.2008
(51) Int. Cl.: B60K 26/02, B60W 50/08, G05B 23/02

(54) **Verfahren und Vorrichtung zur Vorgabe einer Ausgangsgröße einer Antriebseinheit**
Method and Device for providing a target output value of a drive unit
Procédé et dispositif pour prévoir une valeur de consigne d'un dispositif de propulsion

(30) Priorität: 30.07.2007 DE 102007035722
(43) Veröffentlichungstag der Anmeldung: 04.02.2009
(73) Patentinhaber: Robert Bosch GmbH, 70442 Stuttgart (DE)
(72) Erfinder: Kettenacker, Guenter, 71711 Steinheim (DE); Ruland, Christian, 73630 Remshalden (DE); Sanchez Moreno, Maria-Dolores, 70193 Stuttgart (DE)

(56) Entgegenhaltungen:
- DE-A1- 4 338 098
- DE-A1- 19 743 089
- DE-A1- 19 920 851
- DE-A1-102004 047 925
- US-A- 5 054 570
- US-A- 6 064 938

## Beschreibung

### Stand der Technik

Die Erfindung geht von einem Verfahren und von einer Vorrichtung zur Vorgabe einer Ausgangsgröße einer Antriebseinheit nach der Gattung der unabhängigen Ansprüche aus.

Aus der DE 101 62 017 A1 ist bereits eine Vorrichtung und ein Verfahren zur Regelung der Fahrgeschwindigkeit eines Fahrzeugs bekannt, bei denen mittels Betätigung eines Bedienelementes eine Sollgeschwindigkeit des Fahrzeugs vorgegeben wird.

Die gattungsbildende DE 199 20 851 A1 beschreibt eine Vorrichtung und ein Verfahren zur Erkennung von Pedalmechanikfehlern. Dabei wird auf ein klemmendes Gaspedal geschlossen, wenn eine erfasste Gaspedalstellung für eine vorbestimmte Zeit konstant ist.

Aus der DE 43 38 098 A1 ist eine Geschwindigkeitsregelanlage für Kraftfahrzeuge bekannt. Im Bereich des Lenkrades ist ein Bedienhebel angebracht, der über definierte Druckpunkte hinaus in x- und z-Richtung tastend bewegt werden kann, um Funktionen zugeordnete Zusatzfunktionen anzusteuern.

### Vorteile der Erfindung

### Offenbarung der Erfindung

Das erfindungsgemäße Verfahren und die erfindungsgemäße Vorrichtung zur Vorgabe einer Ausgangsgröße einer Antriebseinheit mit den Merkmalen der un-abhängigen Ansprüche haben demgegenüber den Vorteil, dass bei einer Vorgabe des Sollwertes der Ausgangsgröße geprüft wird, ob diese auf einer Betätigung des Bedienelementes beruht und dass wenn festgestellt wird, dass dies nicht der Fall ist, ein Fehler erkannt wird.

Auf diese Weise lässt sich eine fehlerhafte Vorgabe des Sollwertes der Ausgangsgröße auf einfache Weise detektieren. Die fehlerhafte Vorgabe des Sollwertes der Ausgangsgröße wird somit automatisch detektiert. Dies ermöglicht auch eine automatische Durchführung einer Fehlerreaktionsmaßnahme auf einen erkannten Fehler hin.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, dass geprüft wird, ob eine Vorgabe des Sollwertes vorliegt, dass für den Fall, in dem die Prüfung ergibt, dass eine Vorgabe des Sollwertes vorliegt, geprüft wird, ob zeitlich vor der erstmaligen Detektion der Vorgabe des Sollwertes das Bedienelement betätigt wurde und dass wenn dies nicht der Fall ist, ein Fehler erkannt wird. Auf diese Weise lässt sich die Fehlererkennung besonders einfach durch den im fehlerfreien Fall vorhandenen zeitlichen Zusammenhang zwischen der Betätigung des Bedienelementes zur Vorgabe des Sollwertes und der dadurch bedingten tatsächlichen Vorgabe des Sollwertes aufbauen.

Dabei ist es besonders vorteilhaft, dass der Fehler nur dann erkannt wird, wenn keine Betätigung des Bedienelementes detektiert wurde oder wenn die Detektion der Bedienung des Bedienelementes zeitlich um mehr als ein vorgegebener Schwellwert vor der erstmaligen Detektion der Vorgabe des Sollwertes liegt. Auf diese Weise lässt sich der zeitliche Zusammenhang zwischen der Betätigung des Bedienelementes zur Vorgabe des Sollwertes und der tatsächlichen Vorgabe des Sollwertes durch den vorgegebenen Schwellwert eindeutig abbilden und auf diese Weise die Zuverlässigkeit der Fehlererkennung erhöhen.

Ein weiterer Vorteil ergibt sich, dass für den Fall, in dem aufgrund der zeitlich vor der erstmaligen Detektion der Vorgabe des Sollwertes detektierten Betätigung des Bedienelementes kein Fehler erkannt wurde, die Vorgabe des Sollwertes mit einem zuletzt vorgegebenen Sollwert auf eine Änderung verglichen wird und dass für den Fall, in dem eine Änderung erkannt wird, die nicht auf die detektierte Art der Betätigung des Bedienelementes zurückzuführen ist, dennoch ein Fehler erkannt wird. Auf diese Weise lässt sich auch eine fehlerhafte Vorgabe des Sollwertes aufgrund der Betätigung des Bedienelementes in einfacher Weise erkennen. Somit wird eine differenziertere Fehlererkennung ermöglicht.

Ein weiterer Vorteil ergibt sich, wenn für den Fall, in dem die Vorgabe des Sollwertes gegenüber dem zuletzt vorgegebenen Sollwert erhöht ist, ein Fehler erkannt wird, wenn eine Betätigung des Bedienelementes zur Absenkung des Sollwertes oder zur Wiederaufnahme des zuletzt vorgegebenen Sollwertes detektiert wurde. Dies stellt eine einfache Realisierung der Fehlererkennung für einen fehlerhaft erhöhten Sollwert dar.

Vorteilhaft ist auch, dass für den Fall, in dem die Vorgabe des Sollwertes gegenüber dem zuletzt vorgegebenen Sollwert erniedrigt ist, ein Fehler erkannt wird, wenn eine Betätigung des Bedienelementes zur Erhöhung des Sollwertes oder zur Wiederaufnahme des zuletzt vorgegebenen Sollwertes detektiert wurde. Auf diese Weise lässt sich besonders einfach eine fehlerhafte Erniedrigung des Sollwertes aufgrund der Betätigung des Bedienelementes detektieren.

Vorteilhaft ist, dass für den Fall, in dem aufgrund der zeitlich vor der erstmaligen Detektion der Vorgabe des Sollwertes detektierten Betätigung des Bedienelementes kein Fehler erkannt wurde, die Vorgabe des Sollwertes mit einem zuletzt vorgegebenen Sollwert auf eine Änderung verglichen wird und dass für den Fall, in dem keine Änderung erkannt wird, obwohl eine Art der Betätigung des Bedienelementes detektiert wurde, die eine Veränderung des Sollwertes bedingt, dennoch ein Fehler erkannt wird. Auf diese Weise lässt sich ein fehlerhaftes Verharren des Sollwertes auf dem zuletzt vorgegebenen Sollwert in einfacher Weise erkennen.

Vorteilhaft ist weiterhin, wenn bei erkanntem Fehler eine Fehlerreaktionsmaßnahme eingeleitet wird. Auf diese Weise kann ein unerwünschter Fehlbetrieb der Antriebseinheit verhindert werden.

Besonders vorteilhaft ist die Verwendung einer Geschwindigkeit oder einer Drehzahl als Ausgangsgröße. Auf diese Weise lässt sich das erfindungsgemäße Verfahren und die erfindungsgemäße Vorrichtung beispielsweise bei einer Geschwindigkeitsregelung oder bei einer Drehzahlregelung einsetzen.

### Zeichnung

Ein Ausführungsbeispiel der Erfindung ist in der Zeichnung dargestellt und in der nachfolgenden Beschreibung näher erläutert. Es zeigen:
- Figur 1: ein Funktionsdiagramm zur Erläuterung der erfindungsgemäßen Vorrichtung und
- Figur 2: einen Ablaufplan für einen beispielhaften Ablauf des erfindungs- gemäßen Verfahrens.

### Beschreibung des Ausführungsbeispiels

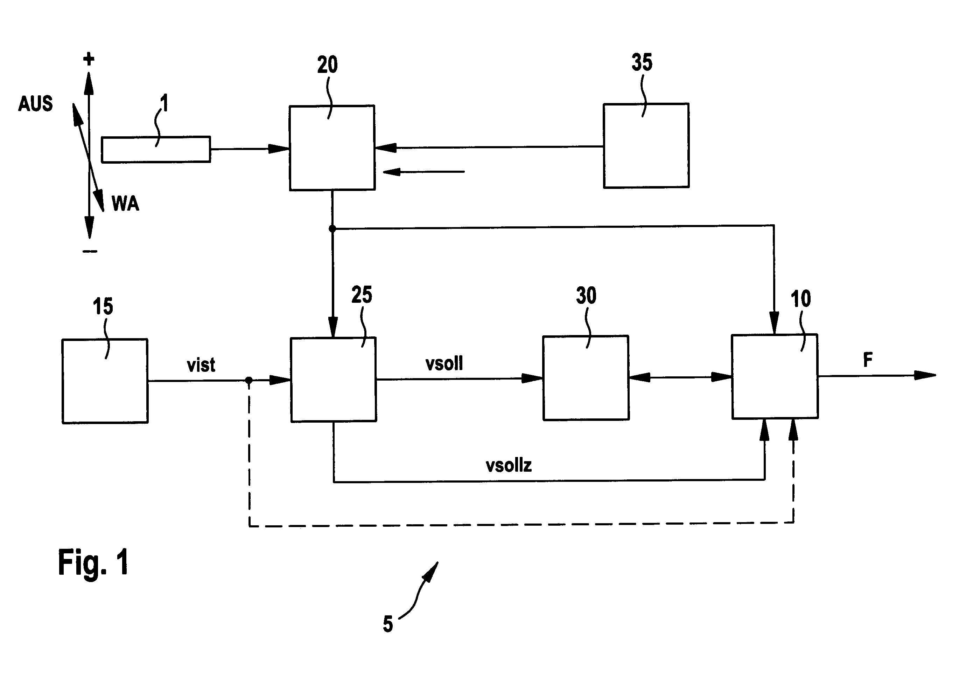

In Figur 1 kennzeichnet 5 eine Vorrichtung zur Vorgabe einer Ausgangsgröße einer Antriebseinheit. Die Antriebseinheit kann beispielsweise eine Brennkraftmaschine oder einen Elektromotor oder einen Hybridantrieb aus Brennkraftmaschine und Elektromotor umfassen und beispielsweise ein Fahrzeug antreiben. Bei der Brennkraftmaschine kann es sich beispielsweise um einen Dieselmotor oder um einen Ottomotor handeln. Die Vorrichtung 5 kann beispielsweise software-und/oder hardwaremäßig in einer Motorsteuerung der Antriebseinheit implementiert sein.

Bei der Ausgangsgröße kann es sich beispielsweise um ein Drehmoment, eine Leistung, eine Geschwindigkeit oder eine Drehzahl handeln.

Im folgenden soll beispielhaft angenommen werden, dass die Antriebseinheit ein Fahrzeug antreibt und dass es sich bei der Ausgangsgröße der Antriebseinheit um die Geschwindigkeit des Fahrzeugs handelt.

Die Vorrichtung 5 umfasst dabei eine Vorgabeeinheit 25, an deren Ausgang die Sollgeschwindigkeit vsoll ausgegeben wird. Die Sollgeschwindigkeit vsoll kann dabei beispielsweise und in einer in Figur 1 nicht dargestellten Weise einer Fahrgeschwindigkeitsregelung zugeführt werden. Die Vorrichtung 5 umfasst weiterhin eine Speichereinheit 30, deren Speicherinhalt durch den jeweils aktuellen Sollgeschwindigkeitswert vsoll überschrieben wird. Die Vorrichtung 5 umfasst weiterhin eine Detektionseinheit 20, der das Signal eines Bedienelementes 1 zugeführt ist. Beim Bedienelement 1 kann es sich beispielsweise um einen Lenkstockhebel eines Tempomaten handeln. Dieser ist in vier Richtungen bewegbar, wie in Figur 1 dargestellt ist. Durch eine Bewegung des Lenkstockhebels 1 nach oben in die "Plus-Position" soll eine vorgegebene Sollgeschwindigkeit vsoll um ein vorgegebenes Inkrement, beispielsweise 1 Kilometer pro Stunde, erhöht werden. Ist keine Sollgeschwindigkeit vsoll aktuell vorgegeben, so soll durch Bewegung des Lenkstockhebels 1 in die "Plus-Position" die aktuelle Istgeschwindigkeit vist des Fahrzeugs als Sollgeschwindigkeit vsoll vorgegeben werden. Durch Bewegung des Lenkstockhebels 1 nach unten in die "Minus-Position" soll eine vorgegebene Sollgeschwindigkeit vsoll um ein vorgegebenes Dekrement, beispielsweise 1 Kilometer pro Stunde, erniedrigt werden. Durch Bewegung des Lenkstockhebels 1 nach vorne in die "WA"-Position soll für den Fall, dass keine Sollgeschwindigkeit vsoll aktuell vorgegeben ist die zuletzt vorgegebene Sollgeschwindigkeit vsoll wieder vorgegeben werden. Dies wird auch als Wiederaufnahme bezeichnet. Wird der Lenkstockhebel 1 nach hinten in die "AUS"-Position bewegt, so soll eine gerade vorgegebene Sollgeschwindigkeit vsoll deaktiviert werden, so dass keine Sollgeschwindigkeit vsoll mehr vorgegeben wird. Der Fahrgeschwindigkeitsregler wird auf diese Weise zusammen mit der Vorgabeeinheit 25 deaktiviert. Die Fahrgeschwindigkeit muss dann durch Fahrpedalbetätigung eingestellt werden. Die Detektionseinheit 20 detektiert die Stellung des Lenkstockhebels 1 und leitet die detektierte Stellung sowohl an die Vorgabeeinheit 25 als auch an eine Prüfeinheit 10 weiter. Der Vorgabeeinheit 25 ist außerdem von einer Erfassungseinheit 15, beispielsweise einem Geschwindigkeitssensor, die Istgeschwindigkeit vist des Fahrzeugs zugeführt. Die Erfassungseinheit 15 kann dabei optional auch außerhalb der Vorrichtung 5 angeordnet sein. Auch der Lenkstockhebel 1 kann optional außerhalb der Vorrichtung 5 angeordnet sein. Die Detektionseinheit 20, die Vorgabeeinheit 25, die Speichereinheit 30 und die Prüfeinheit 10 sind jedoch Bestandteile der Vorrichtung 5.

In der Vorgabeeinheit 25 ist die zuletzt verwendete Sollgeschwindigkeit vsoll abgespeichert. Ist die Vorgabeeinheit 25 deaktiviert und empfängt von der Detektionseinheit 20 als aktuelle Einstellung des Lenkstockhebels 1 die Position "WA", so wird die Vorgabeeinheit 25 aktiviert und gibt als Sollgeschwindigkeit vsoll den zuletzt verwendeten Wert für die Sollgeschwindigkeit ab. Ist die Vorgabeeinheit 25 hingegen aktiviert und empfängt von der Detektionseinheit 20 als aktuelle Position des Lenkstockhebels 1 die Position "AUS", so wird die Vorgabeeinheit 25 deaktiviert und speichert den bis dahin abgegebenen Wert für die Sollgeschwindigkeit als zuletzt verwendete Sollgeschwindigkeit ab. Ist die Vorgabeeinheit 25 deaktiviert und empfängt von der Detektionseinheit die Position "Plus" des Lenkstockhebels 1, so wird die Vorgabeeinheit 25 aktiviert und gibt als Sollgeschwindigkeit vsoll die aktuelle Istgeschwindigkeit vist ab. Ist die Vorgabeeinheit 25 aktiviert und empfängt von der Detektionseinheit 20 die Position "Plus" des Lenkstockhebels 1, so wird die von ihr ausgegebene Sollgeschwindigkeit vsoll um das beschriebene Inkrement erhöht. Ist hingegen die Vorgabeeinheit 25 aktiviert und empfängt von der Detektionseinheit 20 die Position "Minus" des Lenkstockhebels 1, so senkt sie die ausgegebene Sollgeschwindigkeit vsoll um das oben beschriebene Dekrement ab. Die Aktivierung der Vorgabeeinheit 25 ist gleichbedeutend mit der Aktivierung der Fahrgeschwindigkeitsregelung und die Deaktivierung der Vorgabeeinheit 25 ist gleichbedeutend mit der Deaktivierung der Fahrgeschwindigkeitsregelung.

Die Prüfeinheit 10 tastet beispielsweise in einem vorgegebenen Abtastzeitraster den Inhalt der Speichereinheit 30 ab. Ferner ist der Prüfeinheit 10 von der Vorgabeeinheit 25 der abgespeicherte zuletzt verwendete Wert für die Sollgeschwindigkeit vsollz zugeführt. Der zuletzt verwendete Wert vsollz für die Sollgeschwindigkeit ist bei aktivierter Vorgabeeinheit 25 der zuletzt vor einer Änderung auf den aktuellen Sollgeschwindigkeitswert vsoll von der Vorgabeeinheit 25 abgegebene Sollgeschwindigkeitswert. Im Falle der deaktivierten Vorgabeeinheit 25 ist der zuletzt verwendete Wert vsollz der Sollgeschwindigkeit der beim letztmaligen aktivierten Betrieb der Vorgabeeinheit 25 verwendete Sollgeschwindigkeitswert.

Für den Fall, dass die Vorgabeeinheit 25 deaktiviert ist, gibt sie in ihrem Ausgang einen Neutralwert ab, mit dem auch die Speichereinheit 30 überschrieben wird und anhand dessen eindeutig erkennbar ist, dass die Vorgabeeinheit 25 deaktiviert ist.

Die Prüfeinheit 10 prüft nun, ob der abgetastete Inhalt der Speichereinheit 30 ungleich dem Neutralwert ist, also die Vorgabeeinheit 25 aktiviert ist. Ist dies der Fall, so vergleicht die Prüfeinheit 10 die aktuelle Sollgeschwindigkeit vsoll der Speichereinheit 30 mit der zuletzt verwendeten Sollgeschwindigkeit vsollz. Stellt die Prüfeinheit 10 eine Änderung fest, so schließt sie darauf, dass eine Betätigung des Lenkstockhebels 1 vorgelegen haben muss, die zu dieser Änderung führte. Anhand des Ausgangssignals der Detektionseinheit 20 prüft dabei die Prüfeinheit 10, ob eine solche Betätigung des Lenkstockhebels 1 detektiert wurde. Ist dies nicht der Fall, so wird ein Fehlersignal am Ausgang der Prüfeinheit 10 gesetzt. In diesem Fall wurde der Inhalt der Speichereinheit 30 ausgehend vom zuletzt verwendeten Wert vsollz verändert, ohne dass dem eine Betätigung des Lenkstockhebels 1 zugrunde liegt. Es liegt somit ein Fehler vor. Detektiert die Prüfeinheit 10 hingegen eine Betätigung des Lenkstockhebels 1 zu einem Zeitpunkt, der um weniger als ein vorgegebener Schwellwert vor der erstmaligen Detektion einer Änderung der von der Vorgabeeinheit 25 ausgegebenen Sollgeschwindigkeit liegt, so wird am Ausgang der Prüfeinheit 10 ein zurückgesetztes Fehlersignal F abgegeben, so dass kein Fehler erkannt wird. Andernfalls, also bei einer länger als der vorgegebene Schwellwert zurückliegenden detektierten Betätigung des Lenkstockhebels 1 im Vergleich zum Zeitpunkt der erstmalig detektierten Änderung der von der Vorgabeeinheit 25 ausgegebenen Sollgeschwindigkeit detektiert die Prüfeinheit 10 einen Fehler und das Ausgangssignal F der Prüfeinheit 10 wird gesetzt.

Auf diese Weise kann eine fehlerhafte Änderung der Sollgeschwindigkeit erkannt werden, die nicht durch eine Betätigung des Lenkstockhebels 1 ausgelöst wird sondern durch ein fehlerhaftes Überschreiben der Speichereinheit 30. Dabei kann der Schwellwert für die Zeit beispielsweise auf einem Prüfstand beispielsweise derart geeignet appliziert werden, dass er nicht größer als die maximal festgestellte Verzögerung zwischen einer Betätigung des Lenkstockhebels 1 und der dadurch bedingten Änderung des Inhalts der Speichereinheit 30 ist. Auf diese Weise lässt sich eine zuverlässige Fehlererkennung realisieren.

Als Schwellwert wurde beispielsweise ein Wert von einer Sekunde als geeignet ermittelt.

Eine Fehlererkennung durch die Prüfeinheit 10 ist optional auch für den Fall möglich, in dem der zeitliche Abstand zwischen einer Betätigung des Lenkstockhebels 1 in die "Plus"-Position, in die "Minus"-Position oder in die "WA"-Position und einer anschließenden Änderung des Inhalts der Speichereinheit 30 kleiner als der vorgegebene Schwellwert ist. In diesem Fall prüft die Prüfeinheit 10, ob die Änderung des Inhalts der Speichereinheit 30 mit der gewählten Position bei der Betätigung des Lenkstockhebels 1 korreliert. Stellt dabei die Prüfeinheit 10 eine Erhöhung des Speicherinhalts der Speichereinheit 30 bei einer vorausgehenden Betätigung des Lenkstockhebels 1 in die "Minus"-Position oder in die "WA"-Position fest, so wird ein Fehler erkannt und das Fehlersignal F gesetzt. Stellt die Prüfeinheit 10 eine Erniedrigung des Speicherinhalts der Speichereinheit 30 um mehr als ein Dekrement bei einer vorausgehenden Betätigung des Lenkstockhebels 1 in die "Minus"-Position fest, so wird ebenfalls ein Fehler festgestellt und das Fehlersignal F gesetzt. Stellt die Prüfeinheit 10 eine Erniedrigung des Speicherinhalts der Speichereinheit 30 bei vorausgehender Betätigung des Lenkstockhebels 1 in die "Plus"-Position oder in die "WA"-Position fest, so wird ein Fehler erkannt und das Fehlersignal F gesetzt. Stellt die Prüfeinheit 10 eine Erhöhung um mehr als ein Inkrement nach vorausgehender Betätigung des Lenkstockhebels 1 in die "Plus"-Position fest, so wird ein Fehler erkannt und das Fehlersignal F gesetzt. Stellt die Prüfeinheit 10 eine Abweichung zwischen vsoll und vsollz nach vorheriger Betätigung des Lenkstockhebels 1 in die "WA"-Position fest, so wird ebenfalls ein Fehler erkannt und das Fehlersignal F gesetzt. Dabei sei vorausgesetzt, dass nach einer Betätigung des Lenkstockhebels 1 in die "AUS"-Position der Wert vsollz in der Vorgabeeinheit 25 nicht auf den Neutralwert gesetzt wird, sondern auf dem zuletzt eingestellten Wert für die Sollgeschwindigkeit verbleibt. Lediglich die von der Vorgabeeinheit 25 an die Speichereinheit 30 abgegebene Sollgeschwindigkeit vsoll wird in diesem Fall auf den Neutralwert gesetzt.

Stellt die Prüfeinheit 10 eine Sollgeschwindigkeit vsoll ungleich dem Neutralwert in der Speichereinheit 30 nach vorausgehender Betätigung des Lenkstockhebels 1 in die "AUS"-Position fest, so wird ein Fehler erkannt und das Fehlersignal F gesetzt.

Stellt die Prüfeinheit 10 eine Änderung des Speicherinhalts der Speichereinheit 30 vom Neutralwert in einen von der Istgeschwindigkeit vist verschiedenen Wert für die Sollgeschwindigkeit vsoll nach vorausgehender Betätigung des Lenkstockhebels 1 in die "Plus"-Position fest, so wird ebenfalls ein Fehler erkannt und das Fehlersignal F gesetzt. Zu diesem Zweck ist der Ausgang der Erfassungseinheit 15 auch der Prüfeinheit 10 zugeführt, wie in Figur 1 gestrichelt dargestellt ist. Stellt die Prüfeinheit 10 bei einer Änderung des Speicherinhalts der Speichereinheit 30 vom Neutralwert in einen vom Neutralwert verschiedenen Wert für die Sollgeschwindigkeit vsoll fest, dass eine Betätigung des Lenkstockhebels 1 in die "Minus"-Position vorausgeht, so stellt sie einen Fehler fest und das Fehlersignal F wird gesetzt.

Als Neutralwert kann beispielsweise der Wert Null verwendet werden.

Wird das Fehlersignal F gesetzt, so hat dies in einer ersten alternativen Ausführung einen Eintrag in einen Fehlerspeicher zur Folge. Zusätzlich oder alternativ kann mit jedem Setzimpuls des Fehlersignals F ein Fehlerzähler inkrementiert werden, wobei ein Fehler erst dann erkannt wird, wenn der Fehlerzählerstand einen vorgegebenen Schwellwert erreicht oder überschreitet. Zusätzlich oder alternativ kann bei erkanntem Fehler eine Fehlerreaktionsmaßnahme eingeleitet werden, beispielsweise eine Deaktivierung der Fahrgeschwindigkeitsregelung oder eine Begrenzung des Ausgangsdrehmomentes der Antriebseinheit beispielsweise in Abhängigkeit vom Ausmaß der Überschreitung der Sollgeschwindigkeit vsoll durch die Istgeschwindigkeit vist. Alternativ kann als Fehlerreaktionsmaßnahme die Antriebseinheit auch ganz abgeschaltet werden.

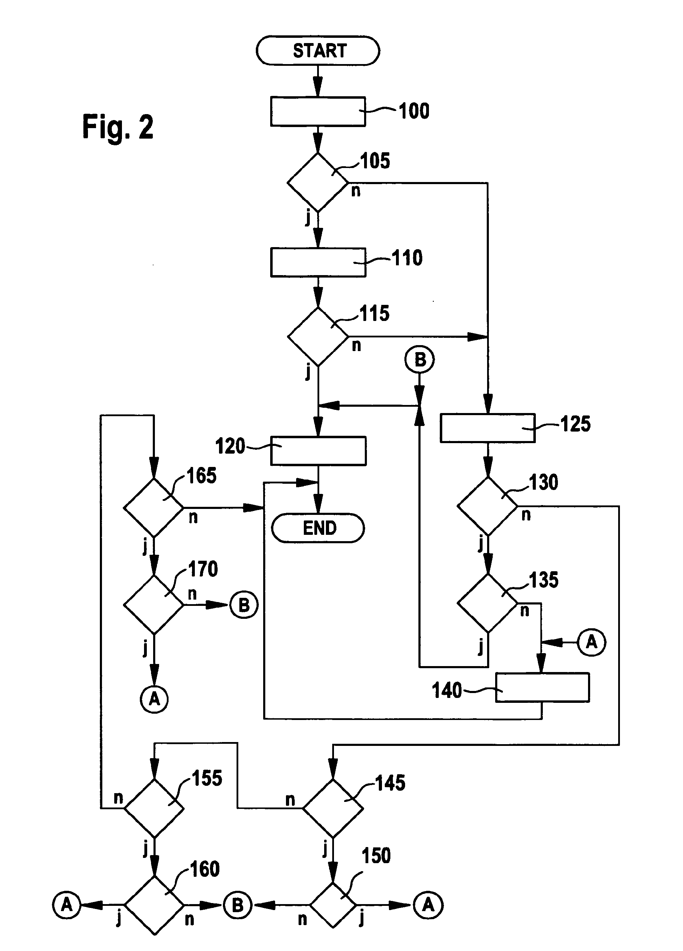

In Figur 2 ist ein Ablaufplan für einen beispielhaften Ablauf des erfindungsgemäßen Verfahrens dargestellt. Nach einem Start des Programms tastet die Prüfeinheit 10 bei einem Programmpunkt 100 die Speichereinheit 30 zu einem vorgegebenen Abtastzeitpunkt beispielsweise in einem vorgegebenen Abtastzeitraster ab. Dabei kann der Ablaufplan nach Figur 2 für jeden dieser Abtastzeitpunkte durchlaufen werden. Anschließend wird zu einem Programmpunkt 105 verzweigt.

Bei Programmpunkt 105 prüft die Prüfeinheit, ob der aus der Speichereinheit 30 bei Programmpunkt 100 ausgelesene Sollwert vsoll ungleich dem vorherigen Sollwert vsollz ist. Ist dies der Fall, so wird zu einem Programmpunkt 120 verzweigt, andernfalls wird zu einem Programmpunkt 125 verzweigt.

Bei Programmpunkt 110 prüft die Prüfeinheit 10 anhand des aufgezeichneten Ausgangssignals der Detektionseinheit 20, wann zuletzt eine Betätigung des Lenkstockhebels 1 stattgefunden hat. Anschließend wird zu einem Programmpunkt 115 verzweigt.

Bei Programmpunkt 115 prüft die Prüfeinheit 10, ob die letzte Betätigung des Lenkstockhebels 1 zeitlich um mehr als den vorgegebenen Schwellwert zurückliegt. Ist dies der Fall, so wird zu einem Programmpunkt 120 verzweigt, andernfalls wird zu einem Programmpunkt 125 verzweigt.

Bei Programmpunkt 120 wird das Fehlersignal F am Ausgang der Prüfeinheit 10 gesetzt. Anschließend wird das Programm verlassen.

Bei Programmpunkt 125 prüft die Prüfeinheit 10 anhand des aufgezeichneten von der Detektionseinheit 20 empfangenen Signals, welcher Art die letzte Betätigung des Lenkstockhebels 1 war. Anschließend wird zu einem Programmpunkt 130 verzweigt.

Bei Programmpunkt 130 prüft die Prüfeinheit 10, ob die letzte Betätigung des Lenkstockhebels 1 eine Betätigung in die "WA"-Position war. Ist dies der Fall, so wird zu einem Programmpunkt 135 verzweigt, andernfalls wird zu einem Programmpunkt 145 verzweigt.

Bei Programmpunkt 135 prüft die Prüfeinheit 10, ob der aktuell abgetastete Wert des Speicherinhalts der Speichereinheit 30 vom Wert vsollz verschieden ist. Ist dies der Fall, so wird zu Programmpunkt 120 verzweigt, andernfalls wird zu einem Programmpunkt 140.

Bei Programmpunkt 140 wird ein zurückgesetztes Fehlersignal F von der Prüfeinheit 10 abgegeben. Anschließend wird das Programm verlassen.

Bei Programmpunkt 145 prüft die Prüfeinheit 10, ob die letzte Betätigung des Lenkstockhebels 1 eine Betätigung in die "Plus"-Position war. Ist dies der Fall, so wird zu einem Programmpunkt 150 verzweigt, andernfalls wird zu einem Programmpunkt 155 verzweigt.

Bei Programmpunkt 150 prüft die Prüfeinheit 10, ob der Speicherinhalt der Speichereinheit 30 um ein Inkrement größer als der Wert vsollz ist oder ob der Speicherinhalt der Speichereinheit 30 ausgehend vom Neutralwert in die Istgeschwindigkeit vist verändert wurde. Ist dies der Fall, so wird zu Programmpunkt 140 verzweigt, andernfalls wird zu Programmpunkt 120 verzweigt.

Bei Programmpunkt 155 prüft die Prüfeinheit 10 anhand des aufgezeichneten Verlaufs des Ausgangssignals der Detektionseinheit 20, ob die letzte Betätigung des Lenkstockhebels 1 eine Betätigung in die "Minus"-Position war. Ist dies der Fall, so wird zu einem Programmpunkt 160 verzweigt, andernfalls wird zu einem Programmpunkt 165 verzweigt.

Bei Programmpunkt 160 prüft die Prüfeinheit 10, ob der Speicherinhalt der Speichereinheit 30 um ein Dekrement gegenüber dem Wert vsollz verringert ist oder ob der Speicherinhalt der Speichereinheit 30 dem Neutralwert entspricht. Ist dies der Fall, so wird zu Programmpunkt 140, andernfalls wird zu Programmpunkt 120 verzweigt.

Bei Programmpunkt 165 prüft die Prüfeinheit 10, ob die letzte Betätigung des Lenkstockhebels 1 eine Betätigung in die "AUS"-Position war. Ist dies der Fall, so wird zu einem Programmpunkt 170 verzweigt, andernfalls wird das Programm verlassen.

Bei Programmpunkt 170 prüft die Prüfeinheit 10, ob der Speicherinhalt der Speichereinheit 30 dem Neutralwert entspricht. Ist dies der Fall, so wird zu Programmpunkt 140 verzweigt, andernfalls wird zu Programmpunkt 120 verzweigt.

Immer dann, wenn der Sollwert vsoll sich ändert, wird der Wert vor der Änderung im Wert vsollz abgespeichert, es sei denn der Wert vor der Änderung war der Neutralwert.

Bei der Ausgangsgröße der Antriebseinheit kann sich alternativ zur Geschwindigkeit auch um eine Drehzahl der Antriebseinheit handeln. Dabei kann dann beispielsweise eine Solldrehzahl mit Hilfe eines entsprechenden Bedienelements 1 in gleicher Weise wie die oben beschriebene Sollgeschwindigkeit vorgegeben und im Rahmen einer Drehzahlregelung eingestellt werden.

Ferner ist in Figur 1 eine Fahrzeugbremse 35 eingezeichnet, die ebenfalls nicht zur Vorrichtung 5 gehören muss und bei deren Betätigung ein entsprechendes Betätigungssignal an die Detektionseinheit 20 übertragen wird. Dabei wird eine Betätigung der Fahrzeugbremse 35 von der Detektionseinheit 20 in gleicher Weise interpretiert wie die Betätigung des Lenkstockhebels 1 in die "AUS"-Position und hat im fehlerfreien Betrieb eine Deaktivierung des Fahrgeschwindigkeitsreglers sowie der Vorgabeeinheit 25 zur Folge. Dabei kann die Prüfeinheit 10 bei einer solchen Deaktivierung nicht unterscheiden, ob sie durch Betätigung des Lenkstockhebels 1 in die "AUS"-Position oder durch Betätigung der Fahrzeugbremse 35 bedingt ist. Für die Fehlererkennung ist die Betätigung des Lenkstockhebels 1 in die "AUS"-Position nicht von der Betätigung der Fahrzeugbremse 35 zu unterscheiden, so dass sich die Betätigung der Fahrzeugbremse 35 in gleicher Weise auf die beschriebene Fehlererkennung auswirkt, wie die Betätigung des Lenkstockhebels 1 in die "AUS"-Position.

Im Falle der Betätigung des Lenkstockhebels 1 in die "AUS"Position bzw. im Falle der Betätigung der Fahrzeugbremse 35 wird die Sollgeschwindigkeit vsoll auf den Neutralwert gesetzt, was bei der vorliegenden Erfindung ebenfalls als Vorgabe des Sollwertes der Ausgangsgröße, hier der Fahrzeuggeschwindigkeit betrachtet wird.

## Patentansprüche

1. Verfahren zur Vorgabe einer Ausgangsgröße einer Antriebseinheit, bei dem mittels Betätigung eines Bedienelementes (1) ein Sollwert für die Ausgangsgröße vorgegeben wird, wobei bei einer Vorgabe des Sollwertes der Ausgangsgröße geprüft wird, ob diese auf einer Betätigung des Bedienelementes (1) beruht und dass wenn festgestellt wird, dass dies nicht der Fall ist, ein Fehler erkannt wird, **dadurch gekennzeichnet, dass** geprüft wird, ob eine Vorgabe des Sollwertes vorliegt, dass für den Fall, in dem die Prüfung ergibt, dass eine Vorgabe des Sollwertes vorliegt, geprüft wird, ob zeitlich vor der erstmaligen Detektion der Vorgabe des Sollwertes das Bedienelement (1) betätigt wurde, und dass wenn dies nicht der Fall ist, ein Fehler erkannt wird.

2. Verfahren nach Anspruch 1, **dadurch gekennzeichnet, dass** der Fehler nur dann erkannt wird, wenn keine Betätigung des Bedienelementes (1) detektiert wurde oder wenn die Detektion der Bedienung des Bedienelementes (1) zeitlich um mehr als ein vorgegebener Schwellwert vor der erstmaligen Detektion der Vorgabe des Sollwertes liegt.

3. Verfahren nach Anspruch 1 oder 2, **dadurch gekennzeichnet, dass** für den Fall, in dem aufgrund der zeitlich vor der erstmaligen Detektion der Vorgabe des Sollwertes detektierten Betätigung des Bedienelementes (1) kein Fehler erkannt wurde, die Vorgabe des Sollwertes mit einem zuletzt vorgegebenen Sollwert auf eine Änderung verglichen wird und dass für den Fall, in dem eine Änderung erkannt wird, die nicht auf die detektierte Art der Betätigung des Bedienelementes (1) zurückzuführen ist, dennoch ein Fehler erkannt wird.

4. Verfahren nach Anspruch 3, **dadurch gekennzeichnet, dass** für den Fall, in dem die Vorgabe des Sollwertes gegenüber dem zuletzt vorgegebenen Sollwert erhöht ist, ein Fehler erkannt wird, wenn eine Betätigung des Bedienelementes (1) zur Absenkung des Sollwertes oder zur Wiederaufnahme des zuletzt vorgegebenen Sollwertes detektiert wurde.

5. Verfahren nach Anspruch 3, **dadurch gekennzeichnet, dass** für den Fall, in dem die Vorgabe des Sollwertes gegenüber dem zuletzt vorgegebenen Sollwert erniedrigt ist, ein Fehler erkannt wird, wenn eine Betätigung des Bedienelementes (1) zur Erhöhung des Sollwertes oder zur Wiederaufnahme des zuletzt vorgegebenen Sollwertes detektiert wurde.

6. Verfahren nach Anspruch 1 oder 2, **dadurch gekennzeichnet, dass** für den Fall, in dem aufgrund der zeitlich vor der erstmaligen Detektion der Vorgabe des Sollwertes detektierten Betätigung des Bedienelementes (1) kein Fehler erkannt wurde, die Vorgabe des Sollwertes mit einem zuletzt vorgegebenen Sollwert auf eine Änderung verglichen wird und dass für den Fall, in dem keine Änderung erkannt wird, obwohl eine Art der Betätigung des Bedienelementes (1) detektiert wurde, die eine Veränderung des Sollwertes bedingt, dennoch ein Fehler erkannt wird.

7. Verfahren nach einem der vorherigen Ansprüche, **dadurch gekennzeichnet, dass** bei erkanntem Fehler eine Fehlerreaktionsmaßnahme eingeleitet wird.

8. Verfahren nach einem der vorherigen Ansprüche, **dadurch gekennzeichnet, dass** als Ausgangsgröße eine Geschwindigkeit oder eine Drehzahl gewählt wird.

9. Vorrichtung (5) zur Vorgabe einer Ausgangsgröße einer Antriebseinheit, mit einem Bedienelement (1), bei dessen Betätigung ein Sollwert für die Ausgangsgröße vorgegeben wird, wobei Prüfmittel (10) vorgesehen sind, die bei einer Vorgabe des Sollwertes der Ausgangsgröße prüfen, ob diese auf einer Betätigung des Bedienelementes (1) beruht und dass die Prüfmittel (10) einen Fehler erkennen, wenn dies nicht der Fall ist, **dadurch gekennzeichnet, dass** geprüft wird, ob eine Vorgabe des Sollwertes vorliegt, dass für den Fall, in dem die Prüfung ergibt, dass eine Vorgabe des Sollwertes vorliegt, geprüft wird, ob zeitlich vor der erstmaligen Detektion der Vorgabe des Sollwertes das Bedienelement (1) betätigt wurde, und dass wenn dies nicht der Fall ist, ein Fehler erkannt wird.

## Claims

1. Method for predefining an output variable of a drive unit, in which a setpoint value for the ouput variable is predefined by means of activation of an operator control (1), wherein, when the setpoint value of the output variable is predefined it is checked whether said output variable is based on activation of the operator control (1), and if it is determined that this is not the case, a fault is detected, **characterized in that** it is checked whether predefinition of the setpoint value has occurred, and **in that** in the case in which the checking reveals that predefinition of the setpoint value has occurred it is checked whether the operator control (1) has been activated, in terms of timing, before the first detection of the predefinition of the setpoint value, and if this is not case, a fault is detected.

2. Method according to Claim 1, **characterized in that** the fault is detected only if no activation of the operator control (1) has been detected or if the detection of the operation of the operator control (1) occurs, in terms of timing, more than one predefined threshold value before the first detection of the predefinition of the setpoint value.

3. Method according to Claim 1 or 2, **characterized in that**, in the case in which no fault has been detected owing to the activation of the operator control (1) which has been detected, in term of timing, before the first detection of the predefinition of the setpoint value, the predefinition of the setpoint value is compared with a last-predefined setpoint value in order to determine a change, and **in that**, in the case in which a change which is not due to the detected type of activation of the operator control (1) is detected, the fault is still detected.

4. Method according to Claim 3, **characterized in that**, in the case in which the predefinition of the setpoint value is increased compared to the last-predefined setpoint value, a fault is detected if activation of the operator control (1) for the purpose of lowering the setpoint value and/or for resuming the last-predefined setpoint value has been detected.

5. Method according to Claim 3, **characterized in that**, in the case in which the predefinition of the setpoint value is decreased compared to the last-predefined setpoint value, a fault detected if activation of the operator control (1) for the purpose of increasing the setpoint value or for resuming the last-predefined setpoint value has been detected.

6. Method according to Claim 1 or 2, **characterized in that**, in the case in which no fault has been detected owing to the activation of the operator control (1) which has been detected, in terms of timing, before the first detection of the predefinition of the setpoint value, the predefinition of the setpoint value is compared with a last-predefined setpoint value in order to determine a change, and **in that**, in the case in which no change is detected even though a type of activation of the operator control (1) has been detected which brings about a change in the setpoint value, a fault is still detected.

7. Method according to one of the preceding claims, **characterized in that** when a fault is detected, a fault reaction measure is initiated.

8. Method according to one of the preceding claims, **characterized in that** a speed or a rotational speed is selected as an output variable.

9. Device (5) for predefining an output variable of a drive unit, having an operator control (1) in the case of the activation of which a setpoint value for the output variable is predefined, wherein checking means (10) are provided which, in the case of a predefinition of the setpoint value of the output variable, check whether the predefinition is due to activation of the operator control (1), and in that the checking means (10) detect a fault if this not the case, **characterized in that** it is checked whether predefinition of the setpoint value has occurred, and **in that**, in the case in which the checking reveals that predefinition of the setpoint value has occurred, it is checked whether the operator control (1) was activated, in terms of timing, before the first detection of the predefinition of the setpoint value, and if this not the case, a fault is detected.

## Revendications

1. Procédé pour prescrire une grandeur de sortie d'une unité d'entraînement, selon lequel une valeur de consigne pour la grandeur de sortie est prescrite en actionnant un élément de commande (1), un contrôle étant effectué lors d'une prescription de la valeur de consigne de la grandeur de sortie pour vérifier si celle-ci repose sur un actionnement de l'élément de commande (1) et une erreur étant détectée s'il est constaté que ce n'est pas le cas, **caractérisé en ce qu'**un contrôle est effectué de la présence d'une prescription de la valeur de consigne, **en ce que** dans le cas où le contrôle a pour résultat qu'il existe une prescription de la valeur de consigne, un contrôle est effectué pour vérifier si l'élément de commande (1) a été actionné antérieurement dans le temps à la première détection de la prescription de la valeur de consigne et **en ce qu'**une erreur est détectée s'il est constaté que ce n'est pas le cas.

2. Procédé selon la revendication 1, **caractérisé en ce que** l'erreur n'est détectée que si aucun actionnement de l'élément de commande (1) n'a été détecté ou si la détection de l'utilisation de l'élément de commande (1) se trouve antérieurement dans le temps à la première détection de la prescription de la valeur de consigne de plus d'une valeur de seul prédéfinie.

3. Procédé selon la revendication 1 ou 2, **caractérisé en ce que** dans le cas où aucune erreur n'a été détectée sur la base de l'actionnement détecté de l'élément de commande (1) antérieurement dans le temps à la première détection de la prescription de la valeur de consigne, la prescription de la valeur de consigne est comparée avec une valeur de consigne prescrite en dernier en vue d'une modification et **en ce que** dans le cas où une modification est détectée, laquelle n'est pas à attribuer à la nature détectée de l'actionnement de l'élément de commande (1), une erreur est tout de même détectée.

4. Procédé selon la revendication 3, **caractérisé en ce que** dans le cas où la prescription de la valeur de consigne est augmentée par rapport à la valeur de consigne prescrite en dernier, une erreur est détectée lorsqu'un actionnement de l'élément de commande (1) en vue de diminuer la valeur de consigne ou en vue de reprendre la valeur de consigne prescrite en dernier est détecté.

5. Procédé selon la revendication 3, **caractérisé en ce que** dans le cas où la prescription de la valeur de consigne est diminuée par rapport à la valeur de consigne prescrite en dernier, une erreur est détectée lorsqu'un actionnement de l'élément de commande (1) en vue d'augmenter la valeur de consigne ou en vue de reprendre la valeur de consigne prescrite en dernier est détecté.

6. Procédé selon la revendication 1 ou 2, **caractérisé en ce que** dans le cas où aucune erreur n'a été détectée sur la base de l'actionnement détecté de l'élément de commande (1) antérieurement dans le temps à la première détection de la prescription de la valeur de consigne, la prescription de la valeur de consigne est comparée avec une valeur de consigne prescrite en dernier en vue d'une modification et **en ce que** dans le cas où aucune modification n'est détectée malgré qu'un actionnement de l'élément de commande (1) ait été détecté qui conditionne une modification de la valeur de consigne, une erreur est tout de même détectée.

7. Procédé selon l'une des revendications précédentes, **caractérisé en ce que** lorsqu'une erreur est détectée, une action réactive à l'erreur est initiée.

8. Procédé selon l'une des revendications précédentes, **caractérisé en ce que** la grandeur de sortie sélectionnée est une vitesse ou une vitesse de rotation.

9. Dispositif (5) pour prescrire une grandeur de sortie d'une unité d'entraînement, comprenant un élément de commande (1) lors de l'actionnement duquel une valeur de consigne pour la grandeur de sortie est prescrite, des moyens de contrôle (10) étant prévus qui, lors d'une prescription de la valeur de consigne de la grandeur de sortie, vérifient si celle-ci repose sur un actionnement de l'élément de commande (1) et les moyens de contrôle (10) détectent une erreur si ce n'est pas le cas, **caractérisé en ce qu'**un contrôle est effectué de la présence d'une prescription de la valeur de consigne, **en ce que** dans le cas où le contrôle a pour résultat qu'il existe une prescription de la valeur de consigne, un contrôle est effectué pour vérifier si l'élément de commande (1) a été actionné antérieurement dans le temps à la première détection de la prescription de la valeur de consigne et **en ce qu'**une erreur est détectée s'il est constaté que ce n'est pas le cas.
